# EUROPEAN PATENT SPECIFICATION

(11) **EP 4 371 081 B1**
(45) Date of publication and mention of the grant of the patent: **12.11.2025**
(21) Application number: 23772749.0
(22) Date of filing: 26.09.2023
(51) Int. Cl.: G06T 19/00, G06T 19/20, G06T 7/70, G06F 3/01, G06V 10/82, G06V 20/20, G06V 20/40, G06Q 50/00

(54) **METHODS AND ELECTRONIC DEVICE FOR GENERATING XR ENVIRONMENT**
VERFAHREN UND ELEKTRONISCHE VORRICHTUNG ZUR ERZEUGUNG EINER XR-UMGEBUNG
PROCÉDÉS ET DISPOSITIF ÉLECTRONIQUE POUR GÉNÉRER UN ENVIRONNEMENT XR

(30) Priority: 04.10.2022 IN 202241057054; 19.09.2023 IN 202241057054
(43) Date of publication of application: 22.05.2024
(73) Proprietor: Samsung Electronics Co., Ltd., Suwon-si, Gyeonggi-do 16677 (KR)
(72) Inventor: PANTHAM, Navaneeth, Bangalore 560037 (IN); JAYARAM, Aravind Kadiroo, Bangalore 560037 (IN); ROY, Sudip, Bangalore 560037 (IN); JAISWAL, Swadha, Bangalore 560037 (IN); JHA, Vishal Bhushan, Bangalore 560037 (IN)
(74) Representative: Appleyard Lees IP LLP
(86) International application number: PCT/KR2023/014855
(87) International publication number: WO 2024/076088

(56) References cited:
- CN-A- 111 652 987
- US-A1- 2013 084 970
- US-A1- 2018 190 023
- US-A1- 2020 086 219
- US-A1- 2020 133 618
- US-A1- 2020 329 214

## Description

### Technical Field

Embodiments disclosed herein relate to virtual world systems, e.g., metaverse systems, Extended Reality, referred to herein as "XR", systems, mixed reality systems, see-through optical device, see-through head mounted devices, optical see-through displays or the like, and more particularly to methods and systems, or electronic devices, for providing an adaptive XR environment based on multiple users.

### Background Art

CN111652987A concerns a method and device for generating an augmented reality group photo image. In the background art, most of present XR environments are static and are only adaptive to a spatial data of one user. However, there are many use cases like a photo booth as a scenario where the XR environment should be adaptive/responsive enough to satisfy the multiple users entirely in a camera Field of View, "FOV", instinctively. By making the XR environment dynamic, it becomes more engaging and interactive for the multiple users or participants. Existing methods and systems do not do anything about generating an adaptive XR environment. This reduces the user experience in such circumstances.

It is desired to address the above-mentioned disadvantages or other short comings or at least provide a useful alternative.

### Disclosure

The principal aim herein is to disclose methods and systems (or electronic device) for providing an adaptive XR environment based on multiple users, referred to herein as "multi user", where multiple users can be identified in a frame and one or more parameters, e.g., virtual object, landmark point or the like, can be used to auto generate an adaptive XR environment in real time.

Another aim is to provide an adaptive XR environment based on the multiple users, where the generated XR environment is made responsive and interactive based on user's proximity and one or more landmark points of the user's in the XR environment.

Another aim is to generate an environment effective user data in real time based on combination of user effective data, i.e. different groups of multiple users detected in the XR environment and the proximity (or distance) between the users in the XR environment.

Another aim is to create a responsive simulation to adapt a base plate, e.g., XR floor or the like, and a base structure based on the environment effective user data and a decorative detail within the base structure of the XR environment based on movement of user body landmark points.

By way of introduction, the following description concerns a method for generating an XR environment by an electronic device according to claim 1.
Additional embodiments are specified in the dependent claims.

Accordingly, the description herein concerns an electronic device including a memory and at least one processor coupled with the memory according to claim 8

There is also described a non-transitory computer-readable storage medium storing instructions which, when executed by at least one processor of an electronic device, may cause the electronic device to perform operations according to claim 15

There is also described an electronic device including an adaptive XR environment controller coupled with a processor and a memory. The adaptive XR environment controller is configured to determine a distance between users from a plurality of users in an XR environment. Further, the adaptive XR environment controller is configured to determine a distance between an object in the XR environment and the users from the plurality of users. Further, the adaptive XR environment controller is configured to generate user effective data based on the determined distance between the users from the plurality of users, and the determined distance between the object in the XR environment and the users from the plurality of users. Further, the adaptive XR environment controller is configured to determine an environment effective data, where the environment effective data includes a user body landmark points of individual users detected in the XR environment. Further, the adaptive XR environment controller is configured to generate the adaptive XR environment based on the user effective data and the environment effective data.

These and other aspects herein will be better appreciated and understood when considered in conjunction with the following description and the accompanying drawings. It should be understood, however, that the following descriptions, while indicating at least one embodiment and numerous specific details thereof, are given by way of illustration.

### Brief Description of Drawings

The embodiments disclosed herein are illustrated in the accompanying drawings, throughout which like reference letters indicate corresponding parts in the various figures. The embodiments herein will be better understood from the following description with reference to the drawings, in which:
FIG. 1 shows various hardware components of an electronic device;
FIG. 2 and FIG. 3 are flow charts illustrating a method for generating an adaptive XR environment;
FIG. 4A-FIG. 4D show example scenarios in which a procedural generation environment dissection is explained for generating the adaptive XR environment;
FIG. 5 depicts an example sequence diagram in which the electronic device generates the adaptive XR environment for multiple users;
FIG. 6A and FIG. 6B depict an example scenario in which the electronic device generates the effective environment data while generating the adaptive XR environment;
FIG. 7 depicts a responsive environment flow while generating the adaptive XR environment;
FIG. 8 depicts an example flow of responsive simulations while generating the adaptive XR environment;
FIG. 9A to FIG. 9D are example scenarios in which scale-based proximity simulation is depicted;
FIG. 10A to FIG. 10D are example scenarios in which the adaptive XR environment generation based on multi user is depicted; and
FIG. 11A and FIG. 11B are another example scenarios in which the adaptive XR environment generation based on multi user is depicted.

### Detailed Description

The embodiments herein and the various features and advantageous details thereof are explained more fully with reference to embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein.

For the purposes of interpreting this specification, the definitions (as defined herein) will apply and whenever appropriate the terms used in singular will also include the plural and vice versa. The terms "comprising", "having" and "including" are to be construed as open-ended terms unless otherwise noted.

The words/phrases "exemplary", "example", "illustration", "in an instance", "and the like", "and so on", "etc.", "etcetera", "e.g.," , "i.e.," are merely used herein to mean "serving as an example, instance, or illustration." Any embodiment or implementation of the present subject matter described herein using the words/phrases "exemplary", "example", "illustration", "in an instance", "and the like", "and so on", "etc.", "etcetera", "e.g.," , "i.e.," is not necessarily to be construed as preferred or advantageous over other embodiments.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks.

It should be noted that elements in the drawings are illustrated for the purposes of this description and ease of understanding and may not have necessarily been drawn to scale. For example, the flowcharts/sequence diagrams illustrate the method in terms of the steps required for understanding of aspects of the embodiments as disclosed herein. Furthermore, in terms of the construction of the device, one or more components of the device may have been represented in the drawings by conventional symbols, and the drawings may show only those specific details that are pertinent to understanding the present embodiments so as not to obscure the drawings with details that will be readily apparent to those of ordinary skill in the art having the benefit of the description herein. Furthermore, in terms of the system, one or more components/modules which comprise the system may have been represented in the drawings by conventional symbols, and the drawings may show only those specific details that are pertinent to understanding the present embodiments so as not to obscure the drawings with details that will be readily apparent to those of ordinary skill in the art having the benefit of the description herein.

The accompanying drawings are used to help easily understand various technical features and it should be understood that the embodiments presented herein are not limited by the accompanying drawings. Usage of words such as first, second, third etc., to describe components/elements/steps is for the purposes of this description and should not be construed as sequential ordering/placement/occurrence unless specified otherwise.

The embodiments herein achieve methods for generating an adaptive XR environment. The method includes generating, by an electronic device, a XR floor associated with an XR environment upon determining a number of users in a physical world. Further, the method includes configuring, by the electronic device, a size of the XR floor in proportion to the determined number of users. Further, the method includes generating, by the electronic device, a base structure associated with the XR floor in the XR environment for a user from the number of users based on a distance between the user from the other users from the number of users. Further, the method includes configuring, by the electronic device, at least one of: a size of the base structure and a position of the base structure based on the distance between the users. Further, the method includes identifying, by the electronic device, a landmark point from a plurality of landmark points for the users upon measuring a distance between the users with reference to the base structure. Further, the method includes generating, by the electronic device, the adaptive XR environment based on the size of the base structure, the position of the base structure, and the plurality of identified landmark points for the users.

Unlike conventional methods and systems, the proposed method can be used to provide the adaptive XR environment based on multiple users. In the proposed methods, the multiple users can be identified in the frame and one or more parameters, e.g., virtual object, landmark point or the like, can be used to auto generate the adaptive XR environment in real-time. The method can be used for providing the adaptive XR environment based on the multi user situation, where the generated environment can be made responsive and interactive based on user(s)'s proximity and one or more landmark points in the XR environment.

Based on the proposed methods, in virtual meetings or events with multiple participants, the adaptive XR environment, or the responsive virtual environment, can adjust itself based on the number of users. An added responsiveness in the background XR environment can create an engaging experience creating a sense of liveliness. The adaptive XR environment, or responsive virtual environment, enhances the user experience by creating procedural environments which are more engaging and personalized based on a setting of the electronic device. The setting is done by the user or the electronic device.

By making the XR environment dynamic, it becomes more engaging and interactive for the multiple user(s), or user and participants. Additionally, responsiveness to multiple users' actions can significantly improve the overall user experience.

The proposed method can be implemented in various augmented reality applications or the XR applications such as AR lens, gaming and virtual events application, virtual tourism and marketing/advertising, game meetup and virtual workshops environments.

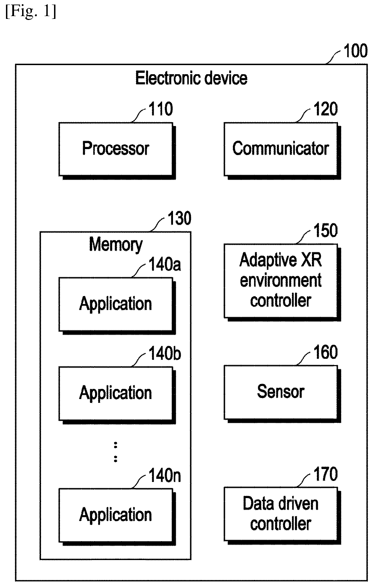

Referring now to the drawings, and more particularly to FIGS. 1 through 11B, where similar reference characters denote corresponding features consistently throughout the figures, there is shown at least one embodiment.

FIG. 1 shows various hardware components of an electronic device 100. The electronic device 100 can be, for example, but not limited to a laptop, a desktop computer, a notebook, a Device-to-Device "D2D", device, a vehicle to everything "V2X", device, a smartphone, a foldable phone, a smart TV, a tablet, an immersive device, a camera, a Virtual Studio Technology "VST", device, a head mounted display "HMD",, a server, an Augmented Reality "AR" glass, a see-through optical device, a see-through head mounted device, an optical see-through display, and an internet of things "IoT" device. The electronic device 100 is suitably also called an Augmented Reality "AR" device, a Mixed Reality "MR" device, a Virtual Reality "VR" device, an XR device, or a metaverse device. The present description is explained in the context of the XR environment, but it is not limited to the XR environment but it is also applicable to an AR environment, a MR environment, a metaverse environment, a VR environment or the like.

Suitably, the electronic device 100 includes a processor 110, a communicator 120, a memory 130, one or more applications 140a-140n, an adaptive XR environment controller 150, a sensor (160) and a data driven controller 170. The processor 110 is communicatively coupled with the communicator 120, the memory 130, the adaptive XR environment controller 150, the sensor 160 and the data driven controller 170. The one or more applications 140a-140n are stored or running in the memory 130. The one or more applications 140a-140n can be, for example, but not limited to a VR application, an XR application, a MR application, an AR application, a social networking application, e.g. Facebook^{®} or the like, a game application or the like. Hereafter, the label of the application is 140. The sensor 160 can be, for example, but not limited to a proximity sensor, a distance determination sensor, a depth senor, or the like.

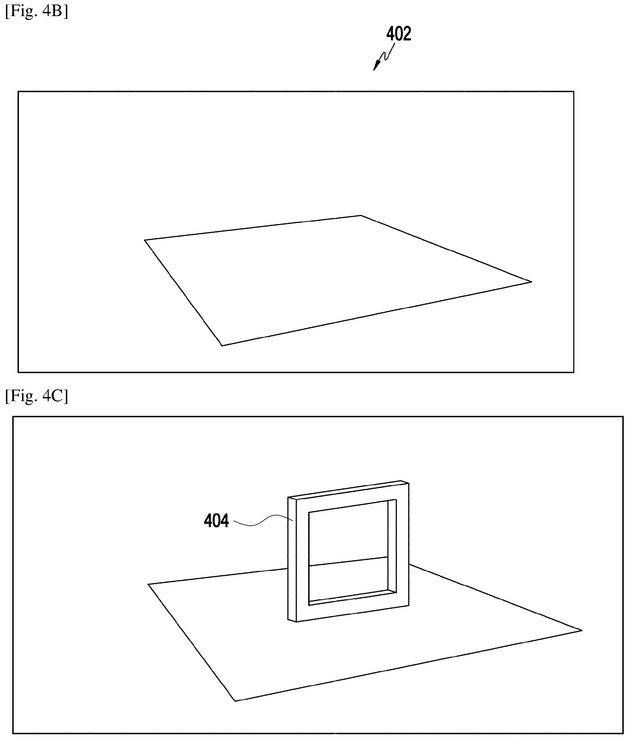

The adaptive XR environment controller 150 determines the number of users in a physical world. Upon determining the number of users in the physical world, the adaptive XR environment controller 150 generates a XR floor, or base plate, 402 as shown in FIG. 4B. This is also referred to as the first XR floor. The XR floor 402 is associated with an XR environment. The XR floor controls one or more areas in the XR environment. For example, the electronic device 100 creates the XR floor by using a visual plane detection technique. In the visual plane detection technique, the electronic device 100 uses the one or more sensors 160 and cameras, not shown, to map the real-world environment in the AR environment, or create a virtual environment in the VR environment. The visual plane detection technique involves the device using its cameras to scan the environment for horizontal surfaces. Once the device has detected a horizontal surface, the electronic device 100 can create a virtual floor that is aligned with that the horizontal surface. In another way, the electronic device 100 creates the XR floor by using environment scanning. In an example, the XR application can scan the real-world environment using the device's cameras and the sensors 160 to detect flat surfaces, like the floor. This is done through a process called simultaneous localization and mapping, "SLAM",) or similar techniques. Based on the scanning, the electronic device 100 creates the XR floor.

Further, the adaptive XR environment controller 150 configures a size of the XR floor in proportion to the determined number of users in the XR environment. Suitably, the adaptive XR environment controller 150 determines a physical location of each of a plurality of user. Further, the adaptive XR environment controller 150 groups the plurality of user into a first location and a second location based on the physical location of each of the plurality of user users and the distance between the users. Further, the adaptive XR environment controller 150 determines the different group of users from the number of users based on a predefined threshold distance. The predefined threshold distance is set by the user of the electronic device 100 or the electronic device 100. Based on the determined different group of users, the adaptive XR environment controller 150 configures the size of the XR floor.

Further, the adaptive XR environment controller 150 determines a distance between the user from the other users from the number of users in the XR environment. Based on the distance between the user from the other users, the adaptive XR environment controller 150 generates the base structure 404, e.g., virtual table or the like, as shown in FIG. 4C. The base structure 404 is associated with the XR floor in the XR environment for the user, from the number of users. The base structure 404 controls a visual composition of the XR environment. The base structure 404 is placed within the XR floor. The information related to the base structure 404 is explained in FIG. 4C.

Based on the distance between the users, the adaptive XR environment controller 150 configures the size of the base structure 404 and a position of the base structure 404. Further, the adaptive XR environment controller identifies the landmark point from the plurality of landmark points for the users upon measuring a distance between the users with reference to the base structure 404.

Based on the size of the base structure 404, the position of the base structure 404, and the plurality of identified landmark points for the users, the adaptive XR environment controller 150 generates the adaptive XR environment. The adaptive XR environment corresponds to dynamically react and adapt to an update within the XR environment. Suitably, the XR floor associated with the adaptive XR environment is dynamically generated based on a number of active users in the physical world.

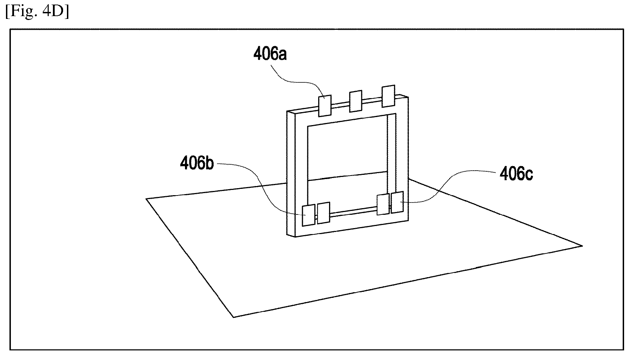

Further, the adaptive XR environment controller 150 generates the decorative detail 406a-406c as shown in FIG. 4D. The decorative detail 406a-406c, e.g., virtual bubbles, flowers, virtual wall, virtual table, or the like, is associated with the plurality of landmark points in the adaptive XR environment. Hereafter, the label of the decorative detail is 406. The decorative detail 406 is generated based on the perception data of the scene, position information of the user(s), and an environmental impact factor in the XR environment. Further, the adaptive XR environment controller 150 positions the decorative detail 406 with reference to the plurality of landmark points in the adaptive XR environment. The landmark point from the plurality of landmark points is placed within the XR floor.

Further, the adaptive XR environment controller 150 detects one or more events. The one or more events includes at least one of: associating a new user to the number of users, disassociating the user from the number of users, a change in a physical location of the user, a change in a user action, and a change in a user behavior. The user action can be, for example, a change in position of the head, a change in position of the hand, or the like. The user behavior can be, for example, starting speaking with another user, walking towards other users or the like. Based on the one or more detected events, the adaptive XR environment controller 150 generates another XR floor, i.e. a second XR floor, associated with the XR environment upon determining the number of users in the physical world. The second XR floor is different the first XR floor. Further, the adaptive XR environment controller 150 configures the size of the second XR floor in proportion to the determined number of users in the XR environment. Further, the adaptive XR environment controller 150 determines a distance between the user from the other users from the number of users. Based on the distance, the adaptive XR environment controller 150 generates a second base structure associated with the second XR floor in the XR environment for the user from the number of users. Based on the distance between the users, the adaptive XR environment controller 150 configures the size of the second base structure and the position of the second base structure. Further, the adaptive XR environment controller 150 measures the distance between the users with reference to the second base structure. Upon measuring a distance between the users with reference to the second base structure, the adaptive XR environment controller 150 identifies the second landmark point from the plurality of landmark points for the users. Based on the size of the second base structure, the position of the second base structure, and the plurality of identified landmark points for the users, the adaptive XR environment controller 150 generates the adaptive XR environment.

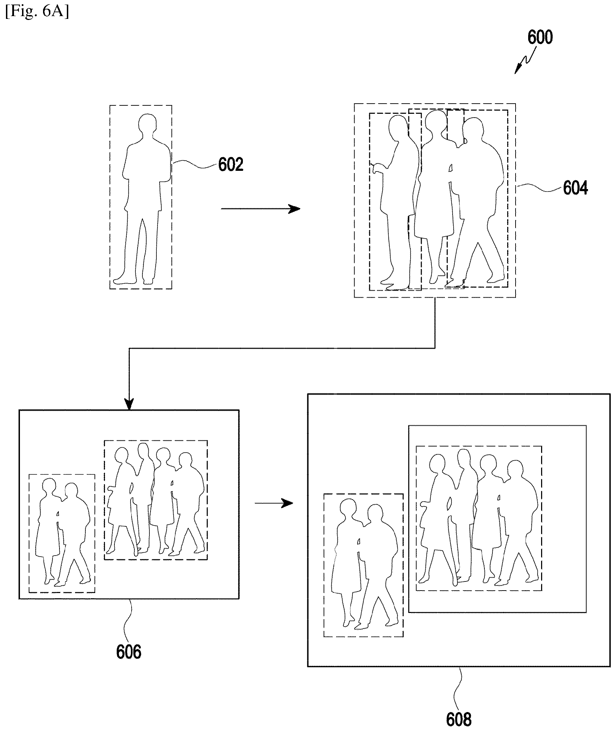

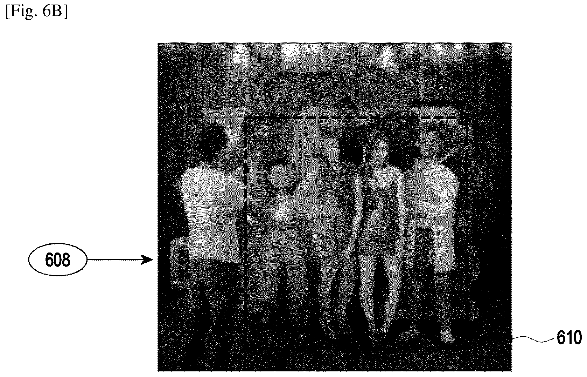

In another embodiment, the adaptive XR environment controller 150 determines the distance between the users from the plurality of users in the XR environment. Further, the adaptive XR environment controller 150 determines the distance between the object in the XR environment and the users from the plurality of users. Based on the determined distance between the users from the plurality of users, and the determined distance between the object in the XR environment and the users from the plurality of users, the adaptive XR environment controller 150 generates user effective data. Generation of the user effective data is explained in FIG. 6. Further, the adaptive XR environment controller 150 determines an environment effective data. The environment effective data corresponds to a user body landmark points of individual users detected in the XR environment. The user body landmark points can be, for example, but not limited to hands, head, torso, or the like. Based on the user effective data and the environment effective data, the adaptive XR environment controller 150 generates the adaptive XR environment.

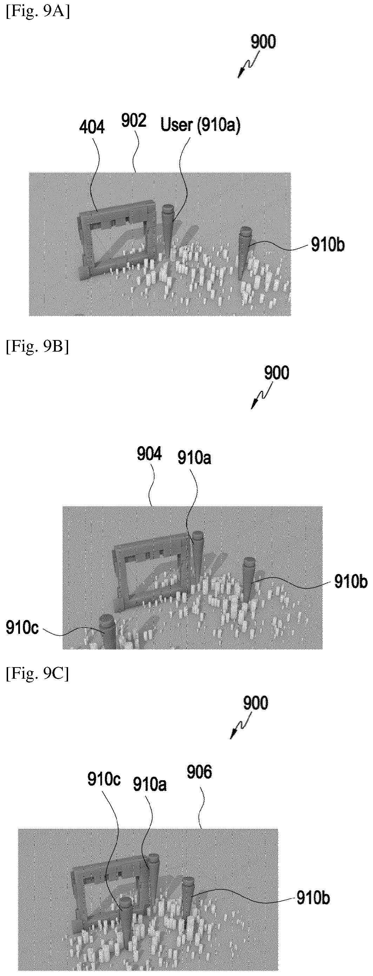

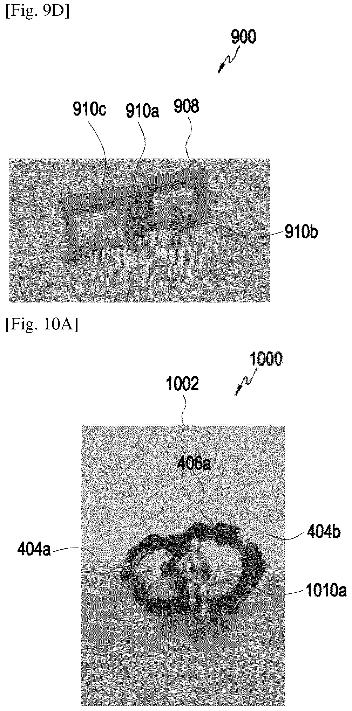

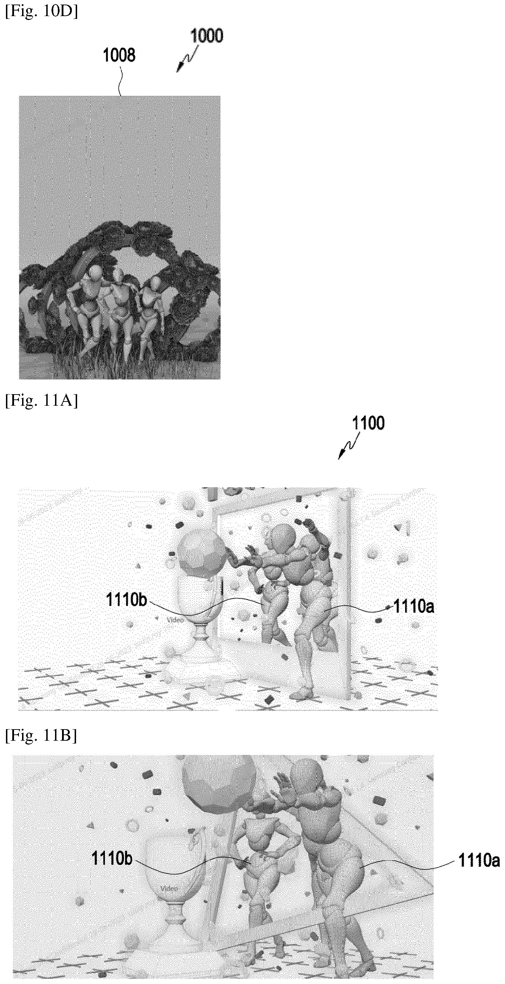

In an example, a scale-based proximity simulation is depicted in FIG. 9A to FIG. 9D, and the adaptive XR environment generation based on the multiple users is depicted in FIG. 10A to FIG. 10D and FIG. 11A and FIG. 11B.

The adaptive XR environment controller 150 is physically implemented by analog or digital circuits such as logic gates, integrated circuits, microprocessors, microcontrollers, memory circuits, passive electronic components, active electronic components, optical components, hardwired circuits, or the like, and may optionally be driven by firmware.

Further, the processor 110 is configured to execute instructions stored in the memory 130 and to perform various processes. The communicator 120 is configured for communicating internally between internal hardware components and with external devices via one or more networks. The memory 130 also stores instructions to be executed by the processor 110. The memory 130 may include non-volatile storage elements. Examples of such non-volatile storage elements may include magnetic hard discs, optical discs, floppy discs, flash memories, or forms of electrically programmable memories, EPROM, or electrically erasable and programmable, EEPROM, memories. In addition, the memory 130 may, in some examples, be considered a non-transitory storage medium. The term "non-transitory" may indicate that the storage medium is not embodied in a carrier wave or a propagated signal. However, the term "non-transitory" should not be interpreted that the memory 130 is non-movable. In certain examples, a non-transitory storage medium may store data that can, over time, change, e.g., in Random Access Memory, "RAM"or cache.

Further, at least one of the plurality of modules/controller may be implemented through an AI/ machine learning, "ML" model using a data driven controller 170. The data driven controller 170 can be a ML model based controller and AI model based controller. A function associated with the AI model may be performed through the non-volatile memory, the volatile memory, and the processor 110. The processor 110 may include one or a plurality of processors. At this time, one or a plurality of processors may be a general purpose processor, such as a central processing unit, "CPU",, an application processor, "AP", or the like, a graphics-only processing unit such as a graphics processing unit, "GPU", a visual processing unit "VPU",, and/or an AI-dedicated processor such as a neural processing unit, "NPU". The processor 100 and the adaptive XR environment controller (150) may be integrally referred to as at least one processor.

The one or a plurality of processors control the processing of the input data in accordance with a predefined operating rule or AI model stored in the non-volatile memory and the volatile memory. The predefined operating rule or artificial intelligence model is provided through training or learning.

Here, being provided through learning means that a predefined operating rule or AI model of a desired characteristic is made by applying a learning algorithm to a plurality of learning data. The learning may be performed in a device itself in which AI according to an embodiment is performed, and/or may be implemented through a separate server/system.

The AI model may include of a plurality of neural network layers. Each layer has a plurality of weight values, and performs a layer operation through calculation of a previous layer and an operation of a plurality of weights. Examples of neural networks include, but are not limited to, convolutional neural network, "CNN", deep neural network, "DNN", recurrent neural network, "RNN", restricted Boltzmann Machine, "RBM", deep belief network, "DBN", bidirectional recurrent deep neural network, "BRDNN", generative adversarial networks, "GAN", and deep Q-networks.

The learning algorithm is a method for training a predetermined target device, for example a robot, using a plurality of learning data to cause, allow, or control the target device to make a determination or prediction. Examples of learning algorithms include, but are not limited to, supervised learning, unsupervised learning, semi-supervised learning, or reinforcement learning.

Although FIG. 1 shows various hardware components of the electronic device (100), it is to be understood that other embodiments are not limited thereon. In other embodiments, the electronic device 100 may include a smaller or greater number of components. Further, the labels or names of the components are used only for illustrative purpose and does not limit the scope of the invention. One or more components can be integrated to perform same or substantially similar function in the electronic device 100.

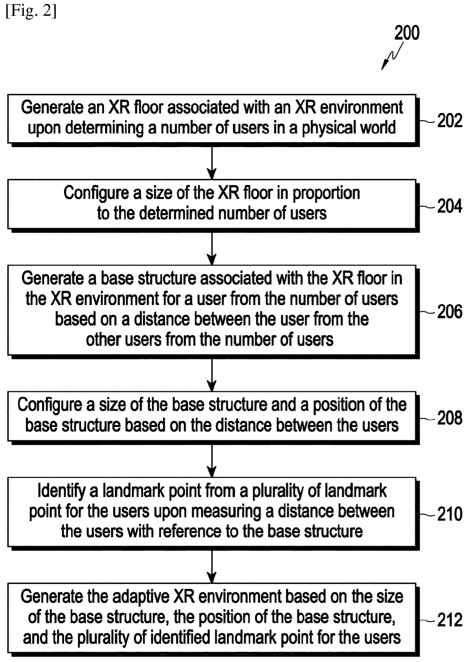

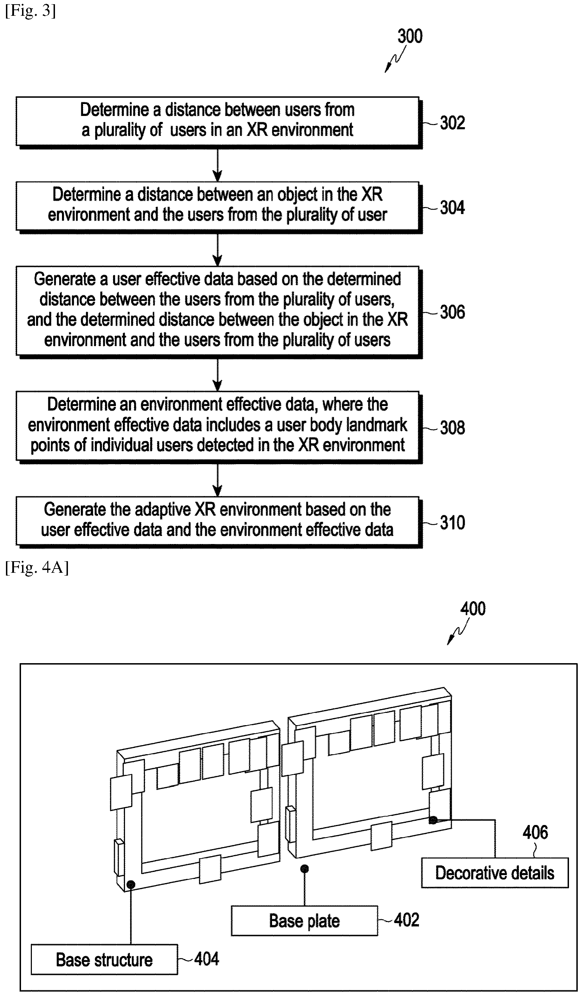

FIG. 2 and FIG. 3 are flow charts 200 and 300 respectively illustrating methods for generating the adaptive XR environment, according to embodiments as disclosed herein.

As shown in FIG. 2, operations S202-S212 are handled by the adaptive XR environment controller 150. At step 202, the method includes generating, the XR floor associated with the XR environment upon determining the number of users in the physical world. At step 204, the method includes configuring the size of the XR floor in proportion to the determined number of users. At step 206, the method includes generating the base structure 404 associated with the XR floor in the XR environment for the user from the number of users based on the distance between the user from the other users from the number of users.

At step 208, the method includes configuring the size of the base structure 404 and the position of the base structure 404 based on the distance between the users. At step 210, the method includes identifying the landmark point from the plurality of landmark points for the users upon measuring the distance between the users with reference to the base structure 404. At step 212, the method includes generating the adaptive XR environment based on the size of the base structure 404, the position of the base structure 404, and the plurality of identified landmark points for the users.

As shown in FIG. 3, the operations S302-S310 are handled by the adaptive XR environment controller 150. At step 302, the method includes determining the distance between the users from the plurality of users in the XR environment. At step 304, the method includes determining the distance between the object in the XR environment and the users from the plurality of users. At step 306, the method includes generating the user effective data based on the determined distance between the users from the plurality of users, and the determined distance between the object in the XR environment and the users from the plurality of users.

At step 308, the method includes determining the environment effective data. The environment effective data includes the user body landmark points of individual users detected in the XR environment. At step 310, the method includes generating the adaptive XR environment based on the user effective data and the environment effective data.

The proposed method can be used to provide the adaptive XR environment based on the multiple users. The generated adaptive XR environment can be made responsive and interactive based on user's proximity and one or more landmark points in the XR environment. Based on the proposed methods, in virtual meetings or events with multiple participants, the adaptive XR environment, or the responsive virtual environment, can adjust itself based on the number of users. The added responsiveness in the background XR environment can create an engaging experience creating a sense of liveliness. The adaptive XR environment, or responsive virtual environment, enhances the user experience by creating procedural environments which are more engaging and personalized based on a setting of the electronic device 100. By making the XR environment dynamic, it becomes more engaging and interactive for the multiple users or participants. Additionally, responsiveness to multiple users' actions can significantly enhance the overall user experience.

FIG. 4A-FIG. 4D show example scenarios 400 in which a procedural generation environment dissection is explained for generating the adaptive XR environment. Every XR environment can be majorly dissected into 3 sections such as base plate 402, base structure 404 and decorative details 406.

As shown in FIG. 4B, the base plate 402 controls the scale and total composition of the XR environment. The main canvas of the base plate 402 provides the initial platform or backdrop on which the elements of the XR environment are placed and organized. The base plate 402 is the bounding box that controls the area the entire environment covers, i.e., the scale of the environment. All the base structures and decorative elements can be placed within the base plate 402 and can be controlled procedurally.

As shown in FIG. 4C, the base structure 404 controls the composition of the base plate 402 of a XR template. The XR template is already configured or defined by the user or the electronic device 100. The base structure 404 can be solid blocks, meshes or planes. In most of the cases, the base structure 404 is a static object, but this is not be a requirement. The base structure 404 controls the visual composition of the environment. The base structure 404 controls the main composition on top of the canvas which assist in alignment and spacing of elements, facilitating an organized composition and the visual balance of elements in the XR environment.

As shown in FIG. 4D, the decorative detail 406 control the visual language, or presentation, of the XR environment. The decorative detail (406) comprise filler details, which mostly control the visual language, and/or mood of environment. These elements can be both static, or dynamic in the sense of responding based on the triggers. The decorative detail 406 provides the visual embellishments, decorative elements, ornamental accents that provide decorative flair and enhance the overall aesthetic of the XR template and establish a distinct visual identity in the XR environment.

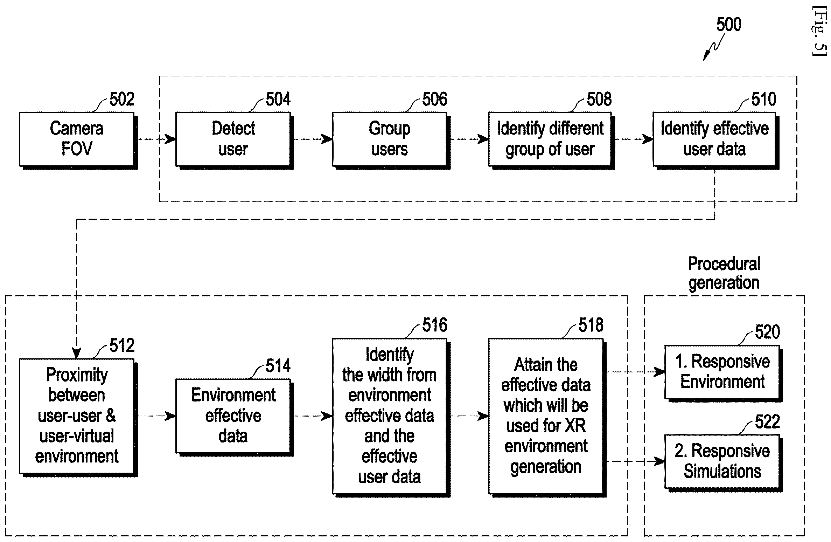

FIG. 5 depicts an example sequence diagram 500 in which the electronic device (100) generates the adaptive XR environment for the multiple users. At step 502, from the field view of the camera, "FOV", of one or more cameras, the electronic device 100 can detect the users and/or group(s) of users present in the FOV at step 504 and step 506, respectively. At step 508, the electronic device 100 identifies the different group(s) of the user(s). The different group(s) of user(s) are determined based on the predefine threshold distance between the user. The predefine threshold distance can be, for example, 30 centimeter, "cm", 100cm or the like. At step 510, the electronic device 100 identifies the effective user data based on the distance between the identified group of users.

At step 512, the electronic device 100 determines the proximity (or distance) between the user-user and the user and the virtual environment. At step 514, the electronic device 100 determines the environment effective data upon determining the proximity between the user-user and the user and the virtual environment. At step 516, the electronic device 100 identifies the width from environment effective data and the effective user data. At step 518, the electronic device 100 attains the effective data which will be used for the XR environment generation.

At step 520, the electronic device 100 provides the responsive environment. The responsive environment refers to an environment that dynamically adjusts and adapts based on the parameters or inputs from the user data. At step 522, the electronic device 100 provides a responsive simulations. The responsive simulation refers to a simulation that dynamically reacts and adapts to the changes within the XR environment. The responsive simulation aims to create a realistic and interactive experience by simulating various aspects of the XR environment and allowing them to respond to user interactions. Also, the electronic device 100 generates the dynamic and interactive procedural XR environment that aligns with the users actions and behaviours.

FIG. 6A and FIG. 6B depict an example scenario 600 in which the electronic device 100 generates the effective environment data while generating the adaptive XR environment. At step 602, the electronic device 100 detects the one or more users and creates a bounding box around the detected people. The bounding box creation is done based on the existing techniques. At step 604, based on the proximity between the users, the electronic device 100 chunks/aggregates the users and creates a group bounding box. At step 606, based on the proximity between the groups, the electronic device 100 segregates the groups into multiple chunks. At step 608, the electronic device 100 derives the user effective data based on factors such as, but not limited to, visual coverage, % of the FOV, visual composition guidelines such as golden ratio, rule of thirds, rule of thumb and so on. The user effective data is determined based on the group segregation. At step 610, the electronic device 100 uses the user effect data and proximity between effective group(s) and virtual environment coordinates to derive environment effective data.

In an example, the electronic device 100 focuses on extracting the environment effective data for each users. The electronic device 100 does so by detecting and tracking body landmark points of the individual users. These body landmark points include key body parts such as hands, head, torso, etc. By analyzing the landmark points, the user action gestures, and the body language, the electronic device 100 is able to meaningfully create the width of the main canvas and the base plate 402.

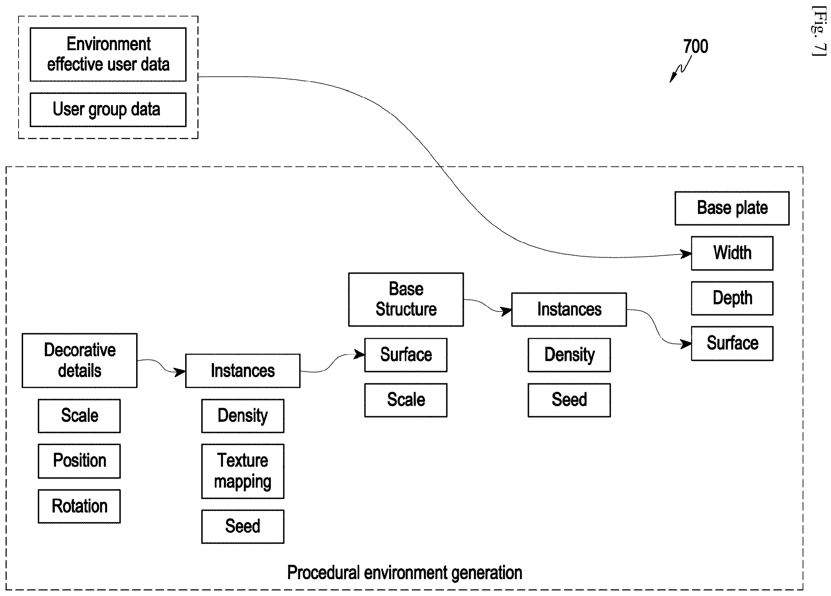

FIG. 7 depicts a responsive environment flow 700 while generating the adaptive XR environment. Using the environment effective user data, the electronic device 100 can generate the procedural environment. The generated environment can include of one or more instances of decorative details 406 placed on the surface of the base structure 404. There can be one or more instances of the base structure 404, placed on the surface of the base plate 402.

As shown in FIG. 7, after analyzing the environment effective data and the user group data, the responsive environment is generated through the interaction of the base plate 402, the base structure 404 and the decorative details 406. The base plate 402 controls the width of total composition determining the overall size, dimension, depth, surface, or proportion of the generated XR environment. The base structure 404 controls the composition of the XR template. By manipulating the base structure 404, the arrangements and organization of various elements within the XR environment can be changed by varying scale or surface of the base structure 404. The decorative detail 406 is responsible for adding ornamental assets. The decorative detail 406 allows the user to customize the aesthetic elements of the generated XR environment and the thematic aspects of the environment by adjusting the position of the decorative detail 406 and a rotating the decorative detail 406 for example. By adjusting the base plate 402, the base structure 404 and the decorative details 406, the electronic device 100 can create the responsive environment and gets the flexibility to generate a wide verity of environments for the multiple users.

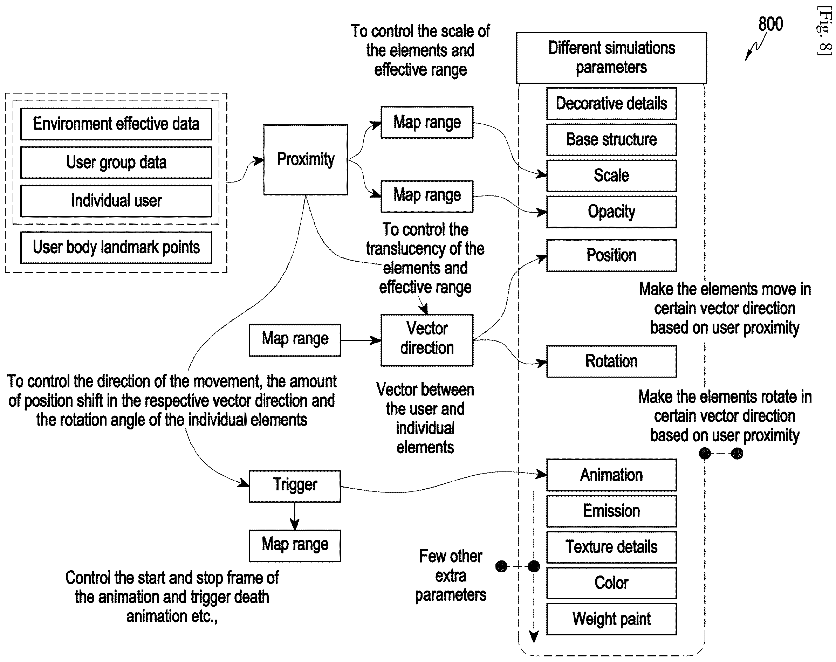

FIG. 8 depicts an example flow 800 of responsive simulations while generating the adaptive XR environment. The parameters depicted in FIG. 8 are examples and it may be obvious to a person of ordinary skill in the art that there may be more simulations that can be created by using a combination of one or more parameters. These include, e.g., map range, vector direction, trigger, and so on. The map range performs one or more operations. The one or more operations can be, for example, controlling the scale of the elements and effective range of the XR environment, controlling a direction of the movement, the amount of position shift in the respective vector direction and the rotation angle of the individual elements in the XR environment, and controlling a start frame and a stop frame of an animation and trigger death animation in the XR environment. The vector direction corresponds to the direction between the user and individual elements.

FIG. 9A to FIG. 9D are example scenarios 900 in which scale-based proximity simulation is depicted. It can be seen that in FIG. 9A to FIG. 9D, the cylinders, which are used to represent users, are only simulated till a certain distance from the user. Apart from that, the individual cylinders are scaled differently. The method uses two condition such as a first condition sets the amount up to with the simulation should affect and a second condition scales the individual element or elements based on the user proximity, e.g., cylinders proximity. Both conditions can be triggered based on the user's location and his/her proximity from the elements, e.g., cylinders, virtual objects, as depicted here. As shown in FIG. 9A in frame 902, the first user 910a stands close to the base structure 404 and the distance between the first user 910a and the user 910b is such that, the virtual objects, white color representation for example, are placed in the frame 902. As shown in FIG. 9B in the frame 904, the first user 910a stands close to the base structure 404 and distance between the user 910a and the user 910b is reduced minimally, and a third user 910c joins in the XR environment. Accordingly, the virtual objects are placed in the frame 904. As shown in FIG. 9C in the frame 906, the second user 910b and the third user 910c are moved toward the first user 910a. Based on the movement, the adaptive XR environment is generated on-the fly. As shown in FIG. 9D in the frame 908, the second user 910b and the third user 910c are moved very close toward the first user 910. Based on the movement, the adaptive XR environment is again generated on-the fly in which the virtual objects are placed closed to the users 910a-910c.

FIG. 10A to FIG. 10D are example scenarios 1000 in which adaptive XR environment generation based on the multiuser is depicted.

Similar to FIG. 9A to FIG. 9D, as shown in FIG. 10A in the frame 1002, the first user 1010a stands close to the base structure 404a and 404). Based on the distance between the first user 1010a and the base stature 404a and 404b, the adaptive XR environment is generated on-the fly in which the decorative details 406a are placed closed to the users 1010a.

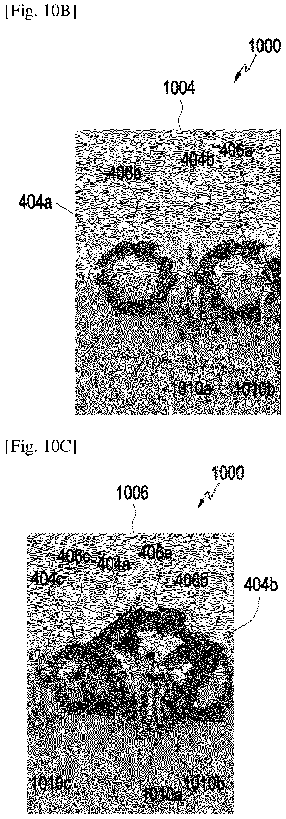

As shown in FIG. 10B in the frame 1004, the first user 1010a stands close to the base structure 404b and a second user 1010b joins in the XR environment, the second user 1010b stands close to the base structure 404b. Based on the distance between the first user 1010a and the base structure 404a and 404b and the distance between the first user 1010a and the second user 1010b, the adaptive XR environment is again generated on-the fly in which the decorative details 406a and 406b are placed closed to the users 1010a and 1010b.

As shown in FIG. 10C in the frame 1006, the first user 1010a and the second user 1010b stand close to the base structure 404a and 404b, the distance between the first user 1010a and the second user 1010b are very minimal, and the third user 1010c joins in the XR environment. Hence, the adaptive XR environment is again generated on-the fly in which the decorative details 406a and 406b are placed closed to the users 1010a-1010c based on the current context, i.e., the first user 1010a and the second user 1010b standing close to the base structure 404a and 40b, the distance between the first user 1010a and the second user 1010b being very minimal, and the second user 1010c joining in the XR environment.

As shown in FIG. 10D in the frame 1008, the all three users 1010a-1010c stand very close to each other besides the base structure 404a and 404b. The adaptive XR environment is again generated on-the fly in which the decorative details 406a and 406b objects are placed closed to the users 1010a-1010c based on the updated context.

FIG. 11A and FIG. 11B are other example scenarios 1100 in which adaptive XR environment generation based on the multiuser is depicted.

Similar to FIG. 10A to FIG. 10D, in a gaming and virtual event, the users of the electronic device (100) can explore virtual world together with other users 1110a and 1110b. The users 1110a and 1110b can interact with the environment and space. The dynamic XR environment can respond to users' actions, so as to enable a more engaging experience.

Similarly, by using the proposed methods, in a virtual tourism, the dynamic and interactive elements can enhance the virtual travel experience where the users can interact with the dynamic environment and interactive historical information.

Similarly, by using the proposed methods, in a marketing and advertising activity, the proposed method can help in creating interactive and engaging campaigns. The dynamic XR environment can respond to the user behaviors delivering targeted personalized interactive experience.

The various actions, acts, blocks, steps, or the like in the flow charts 200-300 may be performed in the order presented, in a different order or simultaneously. Further, in some embodiments, some of the actions, acts, blocks, steps, or the like may be omitted, added, modified, skipped, or the like.

The embodiments disclosed herein can be implemented through at least one software program running on at least one hardware device and performing network management functions to control the elements. The elements can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept.

## Claims

1. A method for generating an extended reality, "XR", environment by an electronic device (100), the method comprising:
generating a XR floor (402) associated with an XR environment upon determining a number of users in a physical world;
configuring a size of the XR floor (402) based on the determined number of users;
generating at least one base structure (404) associated with the XR floor (402) in the XR environment for a user from the number of users based on a distance between the user from the other users from the number of users;
configuring at least one of: a size of the at least one base structure (404) and a position of the at least one base structure (404) based on the distance between the user from the other users;
identifying at least one landmark point from a plurality of landmark points for the users upon measuring a distance between the users with reference to the at least one base structure (404);
generating the XR environment based on the size of the at least one base structure (404), the position of the at least one base structure (404), and the identified at least one landmark point;
**characterised in that** the method further comprises detecting at least one event, wherein the at least one event comprises at least one of associating a new user to the number of users, disassociating the user from the number of users, a change in a physical location of the user, a change in a user action, and a change in a user behavior; and
generating an updated XR floor (402) in response to the event, based on the at least one detected event, and repeating the configuring the size of the XR floor (402), the generating the at least one base structure (404), the configuring the size and/or position of the at least one base structure (404), the identifying at least one landmark point, and the generating the XR environment, to provide an adaptive XR environment.

2. The method of claim 1, further comprising:
generating at least one decorative detail (406) associated with the plurality of landmark points in the XR environment; and
positioning the at least one decorative detail (406) with reference to the plurality of landmark points in the XR environment.

3. The method of claim 1, comprising:
detecting the at least one event;
generating the updated XR floor as a second XR floor associated with the XR environment upon determining the number of users in the physical world based on the at least one detected event;
configuring a size of the second XR floor based on the determined number of users;
generating at least one second base structure associated with the second XR floor in the XR environment for the user from the number of users based on a distance between the user from the other users from the number of users;
configuring at least one of: the size of the at least one second base structure and a position of the at least one second base structure based on the distance between the users;
identifying at least one second landmark point from the plurality of landmark points for the users upon measuring a distance between the users with reference to the at least one second base structure; and
generating the XR environment based on the size of the at least one second base structure, the position of the at least one second base structure, and the plurality of identified landmark point for the users.

4. The method of claim 1, wherein configuring the size of the XR floor based on the determined number of users comprises:
determining a physical location of each of a plurality of user;
grouping the plurality of user into a first location and a second location based on the physical location of each of the plurality of user users and the distance between the users;
determining a different group of user from the number of users based on a predefined threshold distance; and
configuring the size of the XR floor based on the determined different group of user.

5. The method of claim 1, wherein the XR floor associated with the XR environment is dynamically generated based on a number of active user in the physical world.

6. The method of claim 1, wherein the XR floor controls at least one area in the XR environment, wherein the at least one base structure (404) and the at least one landmark point from the plurality of landmark points are placed within the XR floor, and wherein the at least one base structure (404) controls a visual composition of the XR environment.

7. The method of claim 1, wherein the at least one landmark point from the plurality of landmark points is associated with the base structure (404), and wherein the XR environment corresponds to dynamically react and adapt to an update within the XR environment.

8. An electronic device (100), comprising:
memory (130) storing instructions; and
at least one processor (110, 150) coupled with the memory, wherein the instructions, when executed by the at least one processor, cause the electronic device to:
generate a XR floor associated with an XR environment upon determining a number of users in a physical world;
configure a size of the XR floor based on the determined number of users;
generate at least one base structure (404) associated with the XR floor in the XR environment for a user from the number of users based on a distance between the user from the other users from the number of users;
configure at least one of: a size of the at least one base structure (404) and a position of the at least one base structure (404) based on the distance between the user from the other users;
identify at least one landmark point from a plurality of landmark points for the users upon measuring a distance between the users with reference to the at least one base structure (404); and
generate the XR environment based on the size of the at least one base structure (404), the position of the at least one base structure (404), and the identified at least one landmark point;
detect **characterised in that** the instructions, when executed by the at least one processor, further cause the electronic device to at least one event, wherein the at least one event comprises at least one of associating a new user to the number of users, disassociating the user from the number of users, a change in a physical location of the user, a change in a user action, and a change in a user behavior; and
generate an updated XR floor in response to the event, based on the at least one detected event, and repeating the configuring the size of the XR floor, the generating the at least one base structure (404), the configuring the size and/or position of the at least one base structure (404), the identifying at least one landmark point, and the generating the XR environment, to provide an adaptive XR environment.

9. The electronic device of claim 8, wherein the instructions, when executed by the at least one processor (110, 150) cause the electronic device further to:
generate at least one decorative detail (406) associated with the plurality of landmark points in the the XR environment; and
position the at least one decorative detail (406) with reference to the plurality of landmark points in the XR environment.

10. The electronic device of claim 8, wherein the instructions, when executed by the at least one processor (110, 150), cause the electronic device further to:
detect the at least one event;
generate the updated XR floor as a second XR floor associated with the XR environment upon determining the number of users in the physical world based on the at least one detected event;
configure a size of the second XR floor based on the determined number of users;
generate at least one second base structure associated with the second XR floor in the XR environment for the user from the number of users based on a distance between the user from the other users from the number of users;
configure at least one of: the size of the at least one second base structure and a position of the at least one second base structure based on the distance between the users;
identify at least one second landmark point from the plurality of landmark points for the users upon measuring a distance between the users with reference to the at least one second base structure; and
generate the XR environment based on the size of the at least one second base structure, the position of the at least one second base structure, and the plurality of identified landmark point for the users.

11. The electronic device of claim 8, wherein for configuring the size of the XR floor based on the determined number of users, the instructions, when executed by the at least one processor (110, 150) cause the electronic device to:
determine a physical location of each of a plurality of user;
group the plurality of user into a first location and a second location based on the physical location of each of the plurality of user users and the distance between the users;
determine a different group of user from the number of users based on a predefined threshold distance; and
configure the size of the XR floor based on the determined different group of user.

12. The electronic device of claim 8, wherein the XR floor associated with the XR environment is dynamically generated based on a number of active user in the physical world.

13. The electronic device of claim 8, wherein the XR floor controls at least one area in the XR environment, wherein the at least one base structure (404) and the at least one landmark point from the plurality of landmark points are placed within the XR floor, and wherein the at least one base structure (404) controls a visual composition of the XR environment.

14. The electronic device of claim 8, wherein the at least one landmark point from the plurality of landmark points is associated with the base structure (404), and wherein the XR environment corresponds to dynamically react and adapt to an update within the XR environment.

15. A non-transitory computer-readable storage medium storing instructions which, when executed by at least one processor (110, 150) of an electronic device (100), cause the electronic device (100) to perform operations according to the method of any one of claims 1 to 7.

## Patentansprüche

1. Verfahren zur Erzeugung einer erweiterten Realitäts-, "XR-", Umgebung durch eine elektronische Vorrichtung (100), wobei das Verfahren Folgendes umfasst:
Erzeugen einer XR-Fläche (402), die einer XR-Umgebung zugeordnet ist, beim Bestimmen einer Anzahl von Benutzern in einer physischen Welt;
Konfigurieren einer Größe der XR-Fläche (402) basierend auf der bestimmten Anzahl von Benutzern;
Erzeugen mindestens einer Basisstruktur (404), die der XR-Fläche (402) in der XR-Umgebung zugeordnet ist, für einen Benutzer aus der Anzahl von Benutzern basierend auf einem Abstand zwischen dem Benutzer und den anderen Benutzern aus der Anzahl von Benutzern;
Konfigurieren von mindestens einem von einer Größe der mindestens einen Basisstruktur (404) und einer Position der mindestens einen Basisstruktur (404) basierend auf dem Abstand zwischen dem Benutzer und den anderen Benutzern;
Identifizieren mindestens eines Orientierungspunkts aus einer Vielzahl von Orientierungspunkten für die Benutzer beim Messen eines Abstands zwischen den Benutzern unter Bezugnahme auf die mindestens eine Basisstruktur (404);
Erzeugen der XR-Umgebung basierend auf der Größe der mindestens einen Basisstruktur (404), der Position der mindestens einen Basisstruktur (404) und dem identifizierten zumindest einen Orientierungspunkt;
**dadurch gekennzeichnet, dass** das Verfahren ferner das Erfassen mindestens eines Ereignisses umfasst, wobei das mindestens eine Ereignis mindestens eines von Zuordnen eines neuen Benutzers zu der Anzahl von Benutzern, Trennen des Benutzers von der Anzahl von Benutzern, einer Änderung eines physischen Standorts des Benutzers, einer Änderung einer Benutzeraktion und einer Änderung eines Benutzerverhaltens umfasst; und
Erzeugen einer aktualisierten XR-Fläche (402) als Reaktion auf das Ereignis basierend auf dem mindestens einen erfassten Ereignis und Wiederholen des Konfigurierens der Größe der XR-Fläche (402), des Erzeugens der mindestens einen Basisstruktur (404), des Konfigurierens der Größe und/oder Position der mindestens einen Basisstruktur (404), des Identifizierens mindestens eines Orientierungspunkts und des Erzeugens der XR-Umgebung, um eine adaptive XR-Umgebung bereitzustellen.

2. Verfahren nach Anspruch 1, ferner umfassend:
Erzeugen mindestens eines dekorativen Details (406), das der Vielzahl von Orientierungspunkten in der XR-Umgebung zugeordnet ist; und
Positionieren des mindestens einen dekorativen Details (406) unter Bezugnahme auf die Vielzahl von Orientierungspunkten in der XR-Umgebung.

3. Verfahren nach Anspruch 1, umfassend:
Erfassen des mindestens einen Ereignisses;
Erzeugen der aktualisierten XR-Fläche als eine zweite XR-Fläche, die der XR-Umgebung zugeordnet ist, beim Bestimmen der Anzahl von Benutzern in der physischen Welt basierend auf dem mindestens einen erfassten Ereignis;
Konfigurieren einer Größe der zweiten XR-Fläche basierend auf der bestimmten Anzahl von Benutzern;
Erzeugen mindestens einer zweiten Basisstruktur, die der zweiten XR-Fläche in der XR-Umgebung zugeordnet ist, für den Benutzer aus der Anzahl von Benutzern basierend auf einem Abstand zwischen dem Benutzer und den anderen Benutzern aus der Anzahl von Benutzern;
Konfigurieren von mindestens einem von: der Größe der mindestens einen zweiten Basisstruktur und einer Position der mindestens einen zweiten Basisstruktur basierend auf dem Abstand zwischen den Benutzern;
Identifizieren mindestens eines zweiten Orientierungspunkts aus der Vielzahl von Orientierungspunkten für die Benutzer beim Messen eines Abstands zwischen den Benutzern unter Bezugnahme auf die mindestens eine zweite Basisstruktur; und
Erzeugen der XR-Umgebung basierend auf der Größe der mindestens einen zweiten Basisstruktur, der Position der mindestens einen zweiten Basisstruktur und der Vielzahl von identifizierten Orientierungspunkten für die Benutzer.

4. Verfahren nach Anspruch 1, wobei das Konfigurieren der Größe der XR-Fläche basierend auf der bestimmten Anzahl von Benutzern Folgendes umfasst:
Bestimmen eines physischen Standorts von jedem aus einer Vielzahl von Benutzern;
Gruppieren der Vielzahl von Benutzern in einen ersten Standort und einen zweiten Standort basierend auf dem physischen Standort von jedem aus der Vielzahl von Benutzern und dem Abstand zwischen den Benutzern;
Bestimmen einer anderen Gruppe von Benutzern aus der Anzahl von Benutzern basierend auf einem vordefinierten Schwellenabstand; und
Konfigurieren der Größe der XR-Fläche basierend auf der bestimmten anderen Gruppe von Benutzern.

5. Verfahren nach Anspruch 1, wobei die XR-Fläche, die der XR-Umgebung zugeordnet ist, basierend auf einer Anzahl von aktiven Benutzern in der physischen Welt dynamisch erzeugt wird.

6. Verfahren nach Anspruch 1, wobei die XR-Fläche mindestens einen Bereich in der XR-Umgebung steuert, wobei die mindestens eine Basisstruktur (404) und der mindestens eine Orientierungspunkt aus der Vielzahl von Orientierungspunkten innerhalb der XR-Fläche platziert sind und wobei die mindestens eine Basisstruktur (404) eine visuelle Zusammensetzung der XR-Umgebung steuert.

7. Verfahren nach Anspruch 1, wobei der mindestens eine Orientierungspunkt aus der Vielzahl von Orientierungspunkten der Basisstruktur (404) zugeordnet ist und wobei die XR-Umgebung dem dynamischen Reagieren auf und Anpassen an eine Aktualisierung innerhalb der XR-Umgebung entspricht.

8. Elektronische Vorrichtung (100), umfassend:
einen Speicher (130), der Anweisungen speichert; und
mindestens einen Prozessor (110, 150), der mit dem Speicher gekoppelt ist, wobei die Anweisungen, wenn sie von dem mindestens einen Prozessor ausgeführt werden, die elektronische Vorrichtung zu Folgendem veranlassen:
Erzeugen einer XR-Fläche, die einer XR-Umgebung zugeordnet ist, beim Bestimmen einer Anzahl von Benutzern in einer physischen Welt;
Konfigurieren einer Größe der XR-Fläche basierend auf der bestimmten Anzahl von Benutzern;
Erzeugen mindestens einer Basisstruktur (404), die der XR-Fläche in der XR-Umgebung zugeordnet ist, für einen Benutzer aus der Anzahl von Benutzern basierend auf einem Abstand zwischen dem Benutzer und den anderen Benutzern aus der Anzahl von Benutzern;
Konfigurieren von mindestens einem von: einer Größe der mindestens einen Basisstruktur (404) und einer Position der mindestens einen Basisstruktur (404) basierend auf dem Abstand zwischen dem Benutzer und den anderen Benutzern;
Identifizieren mindestens eines Orientierungspunkts aus einer Vielzahl von Orientierungspunkten für die Benutzer beim Messen eines Abstands zwischen den Benutzern unter Bezugnahme auf die mindestens eine Basisstruktur (404); und
Erzeugen der XR-Umgebung basierend auf der Größe der mindestens einen Basisstruktur (404), der Position der mindestens einen Basisstruktur (404) und dem identifizierten zumindest einen Orientierungspunkt;
Erfassen, **dadurch gekennzeichnet, dass** die Anweisungen, wenn sie von dem mindestens einen Prozessor ausgeführt werden, ferner die elektronische Vorrichtung zu mindestens einem Ereignis veranlassen, wobei das mindestens eine Ereignis mindestens eines von Zuordnen eines neuen Benutzers zu der Anzahl von Benutzern, Trennen des Benutzers von der Anzahl von Benutzern, einer Änderung eines physischen Standorts des Benutzers, einer Änderung einer Benutzeraktion und einer Änderung eines Benutzerverhaltens umfasst; und
Erzeugen einer aktualisierten XR-Fläche als Reaktion auf das Ereignis basierend auf dem mindestens einen erfassten Ereignis und Wiederholen des Konfigurierens der Größe der XR-Fläche, des Erzeugens der mindestens einen Basisstruktur (404), des Konfigurierens der Größe und/oder Position der mindestens einen Basisstruktur (404), des Identifizierens mindestens eines Orientierungspunkts und des Erzeugens der XR-Umgebung, um eine adaptive XR-Umgebung bereitzustellen.

9. Elektronische Vorrichtung nach Anspruch 8, wobei die Anweisungen, wenn sie von dem zumindest einen Prozessor (110, 150) ausgeführt werden, die elektronische Vorrichtung zu Folgendem veranlassen:
Erzeugen mindestens eines dekorativen Details (406), das der Vielzahl von Orientierungspunkten in der XR-Umgebung zugeordnet ist; und
Positionieren des mindestens einen dekorativen Details (406) unter Bezugnahme auf die Vielzahl von Orientierungspunkten in der XR-Umgebung.

10. Elektronische Vorrichtung nach Anspruch 8, wobei die Anweisungen, wenn sie von dem mindestens einen Prozessor (110, 150) ausgeführt werden, die elektronische Vorrichtung zu Folgendem veranlassen:
Erfassen des mindestens einen Ereignisses;
Erzeugen der aktualisierten XR-Fläche als eine zweite XR-Fläche, die der XR-Umgebung zugeordnet ist, beim Bestimmen der Anzahl von Benutzern in der physischen Welt basierend auf dem mindestens einen erfassten Ereignis;
Konfigurieren einer Größe der zweiten XR-Fläche basierend auf der bestimmten Anzahl von Benutzern;
Erzeugen mindestens einer zweiten Basisstruktur, die der zweiten XR-Fläche in der XR-Umgebung zugeordnet ist, für den Benutzer aus der Anzahl von Benutzern basierend auf einem Abstand zwischen dem Benutzer und den anderen Benutzern aus der Anzahl von Benutzern;
Konfigurieren von mindestens einem von: der Größe der mindestens einen zweiten Basisstruktur und einer Position der mindestens einen zweiten Basisstruktur basierend auf dem Abstand zwischen den Benutzern;
Identifizieren mindestens eines zweiten Orientierungspunkts aus der Vielzahl von Orientierungspunkten für die Benutzer beim Messen eines Abstands zwischen den Benutzern unter Bezugnahme auf die mindestens eine zweite Basisstruktur; und
Erzeugen der XR-Umgebung basierend auf der Größe der mindestens einen zweiten Basisstruktur, der Position der mindestens einen zweiten Basisstruktur und der Vielzahl von identifizierten Orientierungspunkten für die Benutzer.

11. Elektronische Vorrichtung nach Anspruch 8, wobei zum Konfigurieren der Größe der XR-Fläche basierend auf der bestimmten Anzahl von Benutzern die Anweisungen, wenn sie von dem mindestens einen Prozessor (110, 150) ausgeführt werden, die elektronische Vorrichtung zu Folgendem veranlassen:
Bestimmen eines physischen Standorts von jedem aus einer Vielzahl von Benutzern;
Gruppieren der Vielzahl von Benutzern in einen ersten Standort und einen zweiten Standort basierend auf dem physischen Standort von jedem aus der Vielzahl von Benutzerbenutzern und dem Abstand zwischen den Benutzern;
Bestimmen einer anderen Gruppe von Benutzern aus der Anzahl von Benutzern basierend auf einem vordefinierten Schwellenabstand; und
Konfigurieren der Größe der XR-Fläche basierend auf der bestimmten anderen Gruppe von Benutzern.

12. Elektronische Vorrichtung nach Anspruch 8, wobei die XR-Fläche, die der XR-Umgebung zugeordnet ist, basierend auf einer Anzahl von aktiven Benutzern in der physischen Welt dynamisch erzeugt wird.

13. Elektronische Vorrichtung nach Anspruch 8, wobei die XR-Fläche mindestens einen Bereich in der XR-Umgebung steuert, wobei die mindestens eine Basisstruktur (404) und der mindestens eine Orientierungspunkt aus der Vielzahl von Orientierungspunkten innerhalb der XR-Fläche platziert sind und wobei die mindestens eine Basisstruktur (404) eine visuelle Zusammensetzung der XR-Umgebung steuert.

14. Elektronische Vorrichtung nach Anspruch 8, wobei der mindestens eine Orientierungspunkt aus der Vielzahl von Orientierungspunkten der Basisstruktur (404) zugeordnet ist und wobei die XR-Umgebung dem dynamischen Reagieren auf und Anpassen an eine Aktualisierung innerhalb der XR-Umgebung entspricht.

15. Nichtflüchtiges computerlesbares Speichermedium, das Anweisungen speichert, die, bei Ausführung durch mindestens einen Prozessor (110, 150) einer elektronischen Vorrichtung (100), die elektronische Vorrichtung (100) veranlassen, Vorgänge gemäß dem Verfahren nach einem der Ansprüche 1 bis 7 auszuführen.

## Revendications

1. Procédé permettant la génération d'un environnement de réalité étendue, "XR", par un dispositif électronique (100), le procédé comprenant :
la génération d'un étage XR (402) associé à un environnement XR lors de la détermination d'un nombre d'utilisateurs dans un monde physique ;
la configuration d'une taille de l'étage XR (402) sur la base du nombre déterminé d'utilisateurs ;
la génération d'au moins une structure de base (404) associée à l'étage XR (402) dans l'environnement XR pour un utilisateur provenant du nombre d'utilisateurs sur la base d'une distance entre l'utilisateur et les autres utilisateurs provenant du nombre d'utilisateurs ;
la configuration d'au moins une parmi : une taille de l'au moins une structure de base (404) et d'une position de l'au moins une structure de base (404) sur la base de la distance entre l'utilisateur et les autres utilisateurs ;
l'identification d'au moins un point de repère à partir d'une pluralité de points de repère pour les utilisateurs lors de la mesure d'une distance entre les utilisateurs en référence à l'au moins une structure de base (404) ;
la génération de l'environnement XR sur la base de la taille de l'au moins une structure de base (404), de la position de l'au moins une structure de base (404) et de l'au moins un point de repère identifié ;
**caractérisé en ce que** le procédé comprend en outre la détection d'au moins un événement, ledit au moins un événement comprenant au moins un parmi : l'association d'un nouvel utilisateur au nombre d'utilisateurs, la dissociation de l'utilisateur du nombre d'utilisateurs, un changement dans un emplacement physique de l'utilisateur, un changement dans une action d'utilisateur et un changement dans un comportement d'utilisateur ; et
la génération d'un étage XR mis à jour (402) en réponse à l'événement, sur la base de l'au moins un événement détecté, et la répétition de la configuration de la taille de l'étage XR (402), de la génération de l'au moins une structure de base (404), de la configuration de la taille et/ou de la position de l'au moins une structure de base (404), de l'identification de l'au moins un point de repère et de la génération de l'environnement XR, pour fournir un environnement XR adaptatif.

2. Procédé de la revendication 1, comprenant en outre :
la génération d'au moins un détail décoratif (406) associé à la pluralité de points de repère dans l'environnement XR ; et
le positionnement de l'au moins un détail décoratif (406) en référence à la pluralité de points de repère dans l'environnement XR.

3. Procédé de la revendication 1, comprenant :
la détection de l'au moins un événement ;
la génération de l'étage XR mis à jour en tant que second étage XR associé à l'environnement XR lors de la détermination du nombre d'utilisateurs dans le monde physique sur la base de l'au moins un événement détecté ; la configuration d'une taille du second étage XR sur la base du nombre déterminé d'utilisateurs ;
la génération d'au moins une seconde structure de base associée au second étage XR dans l'environnement XR pour l'utilisateur provenant du nombre d'utilisateurs sur la base d'une distance entre l'utilisateur et les autres utilisateurs provenant du nombre d'utilisateurs ;
la configuration d'au moins une parmi : une taille de l'au moins une seconde structure de base et une position de l'au moins une seconde structure de base sur la base de la distance entre les utilisateurs ;
l'identification d'au moins un second point de repère à partir de la pluralité de points de repère pour les utilisateurs lors de la mesure d'une distance entre les utilisateurs en référence à l'au moins une seconde structure de base ; et
la génération de l'environnement XR sur la base de la taille de l'au moins une seconde structure de base, de la position de l'au moins une seconde structure de base et de la pluralité de points de repère identifiés pour les utilisateurs.

4. Procédé de la revendication 1, ladite configuration de la taille de l'étage XR sur la base du nombre déterminé d'utilisateurs comprenant :
la détermination d'un emplacement physique de chacun d'une pluralité d'utilisateurs ;
le regroupement de la pluralité d'utilisateurs dans un premier emplacement et un second emplacement sur la base de l'emplacement physique de chacun de la pluralité d'utilisateurs et de la distance entre les utilisateurs ; la détermination d'un groupe différent d'utilisateurs provenant du nombre d'utilisateurs sur la base d'une distance seuil prédéfinie ; et
la configuration de la taille de l'étage XR sur la base du groupe différent déterminé d'utilisateurs.

5. Procédé de la revendication 1, ledit étage XR associé à l'environnement XR étant généré dynamiquement sur la base d'un nombre d'utilisateurs actifs dans le monde physique.

6. Procédé de la revendication 1, ledit étage XR commandant au moins une zone dans l'environnement XR, ladite au moins une structure de base (404) et ledit au moins un point de repère de la pluralité de points de repère étant placés à l'intérieur de l'étage XR, et ladite au moins une structure de base (404) commandant une composition visuelle de l'environnement XR.

7. Procédé de la revendication 1, ledit au moins un point de repère de la pluralité de points de repère étant associé à la structure de base (404), et ledit environnement XR correspondant pour réagir et s'adapter dynamiquement à une mise à jour dans l'environnement XR.

8. Dispositif électronique (100), comprenant :
une mémoire (130) stockant des instructions ; et
au moins un processeur (110, 150) couplé à la mémoire, lesdites instructions, lorsqu'elles sont exécutées par l'au moins un processeur, amenant le dispositif électronique à :
générer un étage XR associé à un environnement XR lors de la détermination d'un nombre d'utilisateurs dans un monde physique ;
configurer une taille de l'étage XR sur la base du nombre déterminé d'utilisateurs ;
générer au moins une structure de base (404) associée à l'étage XR dans l'environnement XR pour un utilisateur provenant du nombre d'utilisateurs sur la base d'une distance entre l'utilisateur et les autres utilisateurs provenant du nombre d'utilisateurs ;
configurer au moins l'une parmi : une taille de l'au moins une structure de base (404) et une position de l'au moins une structure de base (404) sur la base de la distance entre l'utilisateur et les autres utilisateurs ; identifier au moins un point de repère d'une pluralité de points de repère pour les utilisateurs lors de la mesure d'une distance entre les utilisateurs en référence à l'au moins une structure de base (404) ; et
générer l'environnement XR sur la base de la taille de l'au moins une structure de base (404), de la position de l'au moins une structure de base (404) et de l'au moins un point de repère identifié ;
détecter, **caractérisé en ce que** les instructions, lorsqu'elles sont exécutées par l'au moins un processeur, entraînent en outre le dispositif électronique à, au moins un événement, ledit au moins un événement comprenant au moins un parmi : l'association d'un nouvel utilisateur au nombre d'utilisateurs, la dissociation de l'utilisateur provenant du nombre d'utilisateurs, un changement dans un emplacement physique de l'utilisateur, un changement dans une action d'utilisateur et un changement dans un comportement d'utilisateur ; et
générer un étage XR mis à jour en réponse à l'événement, sur la base de l'au moins un événement détecté, et la répétition de la configuration de la taille de l'étage XR, de la génération de l'au moins une structure de base (404), de la configuration de la taille et/ou de la position de l'au moins une structure de base (404), de l'identification de l'au moins un point de repère et de la génération de l'environnement XR, pour fournir un environnement XR adaptatif.

9. Dispositif électronique de la revendication 8, lesdites instructions, lorsqu'elles sont exécutées par l'au moins un processeur (110, 150), amenant le dispositif électronique à :
générer au moins un détail décoratif (406) associé à la pluralité de points de repère dans l'environnement XR ;
et
positionner l'au moins un détail décoratif (406) en référence à la pluralité de points de repère dans l'environnement XR.

10. Dispositif électronique de la revendication 8, lesdites instructions, lorsqu'elles sont exécutées par l'au moins un processeur (110, 150), amenant le dispositif électronique, en outre, à :
détecter l'au moins un événement ;
générer l'étage XR mis à jour en tant que second étage XR associé à l'environnement XR lors de la détermination du nombre d'utilisateurs dans le monde physique sur la base de l'au moins un événement détecté ;
configurer une taille du second étage XR sur la base du nombre déterminé d'utilisateurs ;
générer au moins une seconde structure de base associée au second étage XR dans l'environnement XR pour l'utilisateur provenant du nombre d'utilisateurs sur la base d'une distance entre l'utilisateur et les autres utilisateurs provenant du nombre d'utilisateurs ;
configurer au moins une parmi : une taille de l'au moins une seconde structure de base et une position de l'au moins une seconde structure de base sur la base de la distance entre les utilisateurs ;
identifier au moins un second point de repère de la pluralité de points de repère pour les utilisateurs lors de la mesure d'une distance entre les utilisateurs en référence à l'au moins une seconde structure de base ;
et
générer l'environnement XR sur la base de la taille de l'au moins une seconde structure de base, de la position de l'au moins une seconde structure de base et de la pluralité de points de repère identifiés pour les utilisateurs.

11. Dispositif électronique de la revendication 8, en vue de la configuration de la taille de l'étage XR sur la base du nombre déterminé d'utilisateurs, lesdites instructions, lorsqu'elles sont exécutées par l'au moins un processeur (110, 150), amenant le dispositif électronique à :
déterminer un emplacement physique de chacun d'une pluralité d'utilisateurs ;
regrouper la pluralité d'utilisateurs dans un premier emplacement et un second emplacement sur la base de l'emplacement physique de chacun de la pluralité d'utilisateurs et de la distance entre les utilisateurs ; déterminer un groupe différent d'utilisateurs provenant du nombre d'utilisateurs sur la base d'une distance seuil prédéfinie ; et
configurer la taille de l'étage XR sur la base du groupe différent déterminé d'utilisateurs.

12. Dispositif électronique de la revendication 8, ledit étage XR associé à l'environnement XR étant généré dynamiquement sur la base d'un nombre d'utilisateurs actifs dans le monde physique.

13. Dispositif électronique de la revendication 8, ledit étage XR commandant au moins une zone dans l'environnement XR, ledit au moins une structure de base (404) et ledit au moins un point de repère de la pluralité de points de repère étant placés à l'intérieur de l'étage XR, et ladite au moins une structure de base (404) commandant une composition visuelle de l'environnement XR.

14. Dispositif électronique de la revendication 8, ledit au moins un point de repère de la pluralité de points de repère étant associé à la structure de base (404), et ledit environnement XR correspondant pour réagir et s'adapter dynamiquement à une mise à jour dans l'environnement XR.

15. Support de stockage non transitoire lisible par ordinateur stockant des instructions qui, lorsqu'elles sont exécutées par au moins un processeur (110, 150) d'un dispositif électronique (100), amènent le dispositif électronique (100) à réaliser des opérations selon le procédé de l'une quelconque des revendications 1 à 7.
